# EUROPEAN PATENT SPECIFICATION

(11) **EP 4 464 392 B1**
(45) Date of publication and mention of the grant of the patent: **18.11.2026**
(21) Application number: 24169804.2
(22) Date of filing: 11.04.2024
(51) Int. Cl.: B01D 3/00, B01D 5/00

(54) **DISTILLATION URINE PROCESSOR ASSEMBLY AND METHOD OF USE THEREOF**
DESTILLATIONS-URINPROZESSORANORDNUNG UND VERFAHREN ZUR VERWENDUNG DAVON
ENSEMBLE DE TRAITEMENT D'URINE PAR DISTILLATION ET SON PROCÉDÉ D'UTILISATION

(30) Priority: 15.05.2023 US 202318317612
(43) Date of publication of application: 20.11.2024
(73) Proprietor: Hamilton Sundstrand Space Systems International, Inc., Charlotte, NC 28217 (US)
(72) Inventor: SCHUSTER, Ashley Rose Himmelmann, Chicago, IL (US); MUGURUSA, Diego S., North Haven, CT (US)
(74) Representative: Dehns

(56) References cited:
- US-A- 4 316 774
- US-A1- 2018 370 816
- US-B1- 6 258 215
- US-B1- 6 551 466
- US-B2- 7 610 768

## Description

### BACKGROUND

Disclosed herein is a distillation urine processor assembly and method of use thereof.

Space exploration and activities depend on the development of technologies to accommodate long term human habitation in space. Current restraints on space-adapted technologies include limited space, limited storage, and difficulties associated with high complexity equipment.

One of the considerable costs to sustain life in space is the resupply of consumables. These consumables include supplies for equipment maintenance and repair and sustainable food and water sources. A particularly challenging problem is launch of sufficient water to supplement water loss due to humidity loss, oxygen generation, and human waste.

An astronaut produces an average of 1.4 kilograms of water from urine per day. Recapture of water from urine presents an opportunity for substantial cost savings. However, existing urine processor assemblies are technically complex, unfamiliar to potential developers/suppliers, and entail high costs of implementation.

Therefore, the need remains for a simplified, lower cost urine processor assembly. US 4 316 774 A discloses a thermoelectric integrated membrane evaporation system. US6258215B1 discloses another purification system for urine.

### BRIEF DESCRIPTION

A distillation urine processor assembly is provided as defined by claim 1. The distillation urine processor assembly comprises a first collection tank, a heat exchanger, a first separating apparatus, a second separator and a storage tank. The first collection tank is operative to collect urine. The first separating apparatus lies downstream of the heat exchanger and comprises a first separator, at least one pump, and a second collection tank. The first separator is operative to separate urine into water vapor and brine. The at least one pump is in fluid communication with the first separator. The second collection tank is operative to store the brine discharged from the first separator. The second separator lies downstream of the heat exchanger. The second separator is in fluid communication with the heat exchanger. The second separator is operative to separate water from gas. The storage tank lies downstream of the second separator. The storage tank is operative to store water discharged from the second separator.

In one aspect, the assembly further comprises a condenser. The condenser lies downstream of the heat exchanger and upstream of the second separator.

In another aspect, a condenser is integrated into the second separator.

In yet another aspect, the at least one pump is integrated into the first separator.

In yet another aspect, the assembly further comprises a second pump. The second pump lies downstream of the first collection tank and upstream of the heat exchanger.

In yet another aspect, the second separator is a rotary separator.

In yet another aspect, the first separator, the at least one pump, and the second collection tank are arranged in a recycle loop.

The first separator apparatus further comprises a filter and optionally a second storage tank.

In yet another aspect, the first separator is a rotary separator.

In yet another aspect, a pump is integrated into the second separator.

A method of processing urine using a distillation urine processor assembly is provided as defined by claim 9. The method comprises introducing urine into the assembly. The urine is passed through a heat exchanger. The urine is pumped through a first separator that lies downstream the heat exchanger. The urine is separated into brine and a mixture of water vapor and gas in the first separator. The brine is pumped from the first separator through a filter.
The water vapor and gas is discharged from the first separator through the heat exchanger where the heat from the water vapor and gas is transferred to the incoming urine. The mixture of water, water vapor, and gas is discharged through a second separator; where the second separator is operative to separate water from the gas. The water is obtained from condensation of the water vapor.

In an aspect the water discharged from the second separator is stored in a storage tank.

In another aspect, the gas discharged from the second separator is vented to the environment or stored for further processing.

In yet another aspect, the urine is heated in the heat exchanger via heat obtained from a mixture of water vapor and gas discharged from the first separator.

In yet another aspect, the mixture of water, water vapor, and gas is discharged from the heat exchanger to a condenser; where the condenser lies downstream of the heat exchanger and upstream of the second separator.

In yet another aspect, the second separator brings about the separation of water from gas via filtration or membrane separation.

In yet another aspect, the second separator is a rotary separator.

The above described and other features are exemplified by the following Figure and detailed description.

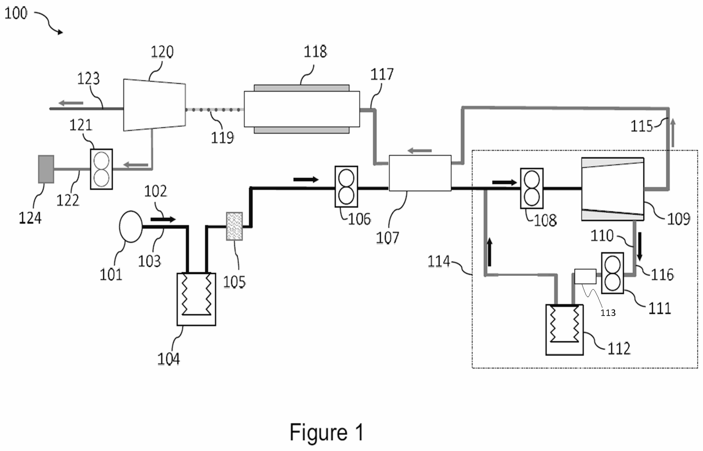

### BRIEF DESCRIPTION OF THE DRAWING

Referring now to the Figure, which is an exemplary embodiment, and wherein the like elements are numbered alike.

The Figure is a schematic of an embodiment of an exemplary simple distillation urine processor assembly.

### DETAILED DESCRIPTION

Disclosed herein is a simple distillation urine processor assembly that processes urine for re-use. The urine processor assembly provides a functional system under demanding environmental conditions including microgravity or zero gravity environments. The assembly utilizes a simple distillation cycle with a phase separating apparatus and recirculating functionality.

The streamlined design of the assembly comprises a storage tank for urine storage before processing. The urine is then discharged from the storage tank through a heat exchanger into a phase separating apparatus. During phase separation, the water is evaporated and a concentrated brine solution is discharged into a collection assembly and can be recirculated through the phase separating apparatus as desired to increase efficiency of the water extraction process. The evaporated water and non-condensable gases from phase separation are charged to the heat exchanger and then a downstream condenser where residual water vapor is condensed to liquid water. The condensed water and gases are pumped out of the condenser into a second phase separator. The resultant gas is vented or stored for later processing and the water is delivered to storage or a water processor.

"Ambient pressure," as used herein, refers to pressure of a surrounding environment.

"Brine," as used herein, refers to mixtures and solutions of salts and water.

"Product fluid" refers to water, water vapor, or a combination thereof. The product fluid is devoid of salts or oils present in urine.

"And/or" as used herein means "and" or "or."

"Microgravity" as used here means near weightless of approximately 1/1,000,000 of Earth's gravity.

"Urine" as used herein refers to untreated and/or treated urine.

The Figure depicts an exemplary simple distillation urine processor assembly 100 (hereinafter assembly 100) that comprises a urine inlet 101, a storage tank 104, a heat exchanger 107, a first phase separating apparatus 114, a condenser 118, and a second separator 120. In certain embodiments, the urine inlet 101 lies upstream of the heat exchanger 106 and is in fluid communication with it. Disposed between the inlet 101 and the heat exchanger 106 is a storage tank 104 and an optional first pump 106. The first pump 106 facilitates the transportation of urine from the inlet 101 to the heat exchanger 107. The heat exchanger 107 heats urine that is to be charged to the first separating apparatus 114. The heat exchanger 107 exchanges heat between a heated product fluid (water, water-vapor, or a combination thereof) received from the first separating apparatus 114 and urine that is to be treated in the first separating apparatus 114. Urine is transported from inlet 101 to the first separating apparatus 114 via stream 103.

Within the assembly 100, the heat exchanger 107 is in fluid communication with a first separating apparatus 114. The first separating apparatus 114 facilitates the separation of the urine into brine and water or brine and water-vapor.

The first separating apparatus 114 comprises an optional second pump 108, a first separator 109, an optional third pump 111, a second collection tank 112 and a filter 113. In one embodiment, at least one of the second pump 108 or the third pump 111 are present in the separating apparatus 114. In an alternative embodiment, the first separating apparatus 114 can comprise no pumps. In an embodiment, the first separator 109 can integrate a pumping function.

In an embodiment, the first separator 109 lies downstream of the second pump 108 and upstream of the third pump 111. The second collection tank 112 and the filter 113 lie downstream of the separator 109. Fluid emanating from the separator 109 is transported to the pump 111, storage tank 112 and filter 113 via stream 110.

In an embodiment, the second pump 108, the first separator 109, the third pump 111, the second collection tank 112 and the filter 113 can lie in a recycle loop 116. A recycle loop is one where each component of the loop can be both upstream and downstream of any other component in the loop. For example, the first separator 109 is both upstream and downstream of the filter 113 because fluid discharged from the first separator 109 is fed to the filter 113, while at the same time fluid discharged by the filter 113 is fed to the first separator 109. For increased extraction of water from the brine, the brine can be re-cycled through the first separating apparatus 114 within the recycle loop. A portion of the product fluid can be continuously removed downstream of the first separator 109 from the recycle loop and charged to the heat exchanger 107 via stream 115.

Product fluid discharged from the first separating apparatus 114 is transported to the heat exchanger 107 via stream 115. Heat generated in the product fluid during phase separation is exchanged with incoming urine in the heat exchanger 107. This heat exchange improves the efficiency of the assembly 100. In an embodiment, the product fluid after exchanging its heat in the heat exchanger 107 is discharged to a second separator 120 via streams 117 and 119. In an embodiment, the product fluid after exchanging its heat in the heat exchanger 107 is discharged to a condenser 118 via stream 117.

Downstream of the heat exchanger 107 lies a condenser 118, a second separator 120 and a storage unit 124. The condenser 118 lies upstream of the second separator 120, which lies upstream of the storage unit 124. The condenser 118 cools the product fluid so that it exists primarily in liquid form (i.e., liquid water). The liquid water may be discharged from the condenser 118 to the second separator 120 via stream 119. An optional fourth pump 121 may be located downstream of the second separator 120 and facilitates transportation of the purified water into the storage unit 124 via stream 122. The second separator 120, the fourth pump 121, and the condenser 118 can be combined within a single unit if desired. In some embodiments, the second separator 120, fourth pump 121, and condenser 118 can be enclosed together in a housing.

The collection tanks 104 and 112 can be the same or different. A collection tank 104 or a collection tank 112 can be a pressure-controlled storage tank, such as a bellows tank, a bladder tank, or a diaphragm tank. In some embodiments, the collection tanks can be enclosed in a housing to prevent fluid escape. During storage and/or before entry of the urine into the stream 103, the urine can be chilled via mechanical refrigeration or other suitable cooling techniques. In some embodiments, the collection tank 104 includes absorptive beds and other materials for stabilization and storage of the urine. In some embodiments, the collection tank 104 and/or collection tank 112 can be pressurized above the operating pressure of the system to drive fluid into the system. In an alternative embodiment, the collection tank 112 can contain suitable absorbents such as ion exchange resins to facilitate removal of salt from the urine and brine.

The streams 103, 110, 115, 117, 119, 122, and 123 that transport urine, brine and product fluids (water, water-vapor, or a combination thereof) comprise conduits that contain stainless steel, titanium, nickel-chromium-molybdenum alloys, titanium alloys, fluoropolymers, and the like, or a combination thereof. Suitable fluoropolymers include polytetrafluoroethylene, perfluoroalkoxy alkanes (PFA), fluorinated ethylene propylene (FEP), polyaryletherketone polymers, chlorofluoropolymers, and fluorocarbon rubbers. In some embodiments the streams 103, 110, 115, 117, 119, 122, and 123 may comprise the same materials or different materials. The conduits can withstand pressures of zero to about 300 kilopascal (kPa), of about zero to about 200 kPa, of about zero to about 150 kPa. The flow rate of the urine, brine and fluids through the conduits can be about up to approximately 15 milliliters per minute (mL/min), up to approximately 13 mL/min, up to about 5 mL/min.

The urine flows through a heat exchanger 107 and is heated by heat generated from the product fluid discharged from the separating apparatus 114. The heat exchanger 107 increases efficiency of the separation process by pre-heating the urine close to saturation temperature before discharge into the first separator 109. The heat exchanger 107 can be a regenerative or a recuperative heat exchanger where the urine absorbs the heat of the water vapor, liquid, and gas mixture discharged from the separating apparatus 114. The heat exchanger can be a parallel flow heat exchanger, a counter flow heat exchanger, or a cross-flow heat exchanger.

As noted above, the assembly 100 comprises a plurality of pumps - first optional pump 106, second optional pump 108, third optional pump 111 and fourth optional pump 121. In an embodiment, the system comprises at least one pump. In an embodiment, the first separating apparatus 114 comprises at least one pump and the second separator 120 is in direct fluid communication with at least one pump. Pumps used throughout the urine processor assembly can differ in design and type based on the area of use within the assembly 100. Suitable pumps include bellow pumps, diaphragm pumps, peristaltic pumps, scroll pumps and gear pumps. In an embodiment, the pumps are peristaltic pumps. In an embodiment, the second pump 108 can be optionally integrated into the heat exchanger 107 or moved upstream of the heat exchanger 107. In some embodiments, the second pump 108 is located downstream of the heat exchanger 107.

The first separator 109 and the second separator 120 can be the same or different. The separators can be rotary separators, membrane separators, inertial separators, or any separator suitable for separation of brine from water and/or water vapor in microgravity to zero gravity conditions. In alternative embodiments, the separators can be gravity-based separators. When the first separator 109 or the second separator 120 is a rotary separator, separation occurs via the imposition of rotational inertia imposed on the fluids and their relative densities. The rotary separator provides phase separation during rotation under ambient pressure while heat is added to the urine (i.e., the temperature is increased). Membrane separators can separate water from gases via a screen or membrane with hydrophobic or hydrophilic properties. In one embodiment, the first separator 109 is a rotary separator, while the second separator 120 is a membrane separator. In alternative embodiments, the first separator 109 is a rotary separator with integrated heaters to simultaneously boil and separate the urine/brine from the water vapor. In one embodiment, a heater integrated into the first separator 109 and/or a preheater upstream of the first separator 109 receives heat via electric-powered heaters. In another embodiment, a preheater upstream of the first separator 109 is a recuperative heat exchanger 107. The first separator 109 can perform both the function of boiling the urine and the function of separating the liquid urine and water vapor. In another embodiment, the first separator 109 and the second separator 120 are both rotary separators.

The filter 113 can be located upstream or downstream of the brine collection tank 112 as shown in the Figure. In some embodiments, the filter can be integrated into the brine collection tank 112. In alternative embodiments, multiple filters can be present in the first separating apparatus 114. For example, a coarse filter (e.g., 100 micrometers pore size) can be used upstream of a less coarse filter (e.g., 10 micrometers pore size). The filter 113 can comprise internal mesh elements sized to the desired pore size. Suitable materials for the internal mesh of the filter 113 include stainless steel, titanium, polytetrafluoroethylene, or a combination thereof. In another embodiment, the filtrate from filtering the brine can be re-cycled through the separator 109 to increase the overall yield of water from the urine. In an alternative embodiment, the filter 113 can comprise suitable absorbents such as ion exchange resins to facilitate removal of salt from the urine and brine.

As shown in the Figure, the assembly 100 can intake urine directly for processing or store the urine for later use. The flow of urine and its byproducts through the assembly 100 are indicated by arrows 102. Urine is taken into the system at an inlet 101 and transported through conduits 103, 110, 115, 117, 119, 122, 123, and so on, as described in detail below. The urine can be pre-treated prior to intake into the assembly 100 or added directly to the assembly 100. Suitable pretreatment methods can comprise a treatment via oxidative processes (e.g., ozone) or treatment with chemicals including acid, hexavalent chromium, quaternary amines, and combinations thereof. Suitable acids for pretreatment include acetic, benzoic, citric, glycolic, hydrochloric, nitric, phosphoric, sulfuric, or a combination thereof. In some embodiments, the pH of the urine can be adjusted to a pre-set level before processing.

Urine can be fed directly into the assembly 100 at inlet 101 and stored in a collection tank 104. In alternative embodiments, the assembly 100 can have an optional entry point 105 after the collection tank 104, such that the urine is processed directly through the assembly 100 without storage. In some embodiments, the inlet 101 can be via the various waste sources, such as direct incorporation to the universal commode system (space toilet). Pumps can be optionally placed before and/or after a collection tank 104.

In embodiments where the urine is stored before processing, the urine can be stored in the collection tank 104. When the urine is ready for processing, it is pumped through the heat exchanger 107, where it is heated by the product fluid discharged from the first separating apparatus 114. After passage through the heat exchanger 107, the urine enters the first separator 109, where it is separated into brine and water and/or water vapor.

The brine residue can be discharged into a collection tank 112 and/or can be filtered in filter 113 and re-cycled through the recycle loop of the first separating apparatus 114. The vapor and gases exiting the first separator 109 is discharged via stream 115 to the heat exchanger 107. After passage through the heat exchanger, the mixture of water, water vapor, and non-condensable gases pass through a condenser unit 118. The water and non-condensable gases are pumped via stream 119 to the second separator 120. The gas is vented out via stream 123 and the water is separated via stream 122. The water is then collected in a storage unit 124 or sent to further processing. As noted above, pumps can be used throughout the system to drive the flow of the materials.

The assembly 100 provides the capability to reduce water loss to urine. As each human produces approximately 1.4 kilogram of water per day, the costs to provide the equivalent replacement water will be reduced by implementation of this assembly. The assembly provides a simple distillation cycle with limited components to reduce system complexity and production costs. The assembly 100 can function in a microgravity environment and can collect greater than 90% of the water in crew member urine for processing and re-use. In some embodiments, the assembly 100 can be utilized in standard gravity to zero gravity conditions or environments with greater gravitational forces than standard gravity.

When the separator 109 is a rotary separator, the separation occurs via the imposition of rotational inertia imposed on the fluids and their relative densities. During the phase separation, water evaporates and urine is concentrated into a brine solution. The brine is pumped out of the first separator 109 into stream 110 via the third pump 111. In some embodiments, the pump 111 is integrated into the first separator 109. In some embodiments, the brine is stored in a collection tank 112 before further processing. In some embodiments, the brine is partially separated in the collection tank to facilitate re-cycling of the liquids (present in the brine) through the first separator 109 within the recycle loop 116. In this manner, the collection tank 112 can serve as a separating chamber for the liquid and solid components of the brine. The brine within the collection tank 112 can be separated by gravitational forces and/or filters.

After phase separation, the water vapor and other gases are discharged from the first separator 109 via stream 115. In some embodiments, the water vapor and other gases are driven from the first separator 109 by a pump. In some embodiments the pump can be integrated into the heat exchanger 107. Within the heat exchanger 107, the water, water vapor and gas mixture exchange heat with incoming urine. The addition of a heat exchanger improves the efficiency of the process by warming the incoming urine stream 103 for phase separation and cooling the water vapor stream 115.

After the water, water vapor, and gas mixture is discharged from the heat exchanger 106, the mixture flows via stream 117 into the condenser 118. The condenser 118 condenses the remaining water vapor to provide a water/gas mixture.

After passing through the condenser 118, the water and gas mixture is ready for phase separation. The mixture is pumped via stream 119 into another separating apparatus (the second separator 120). A pump can be downstream of the condenser 118 or integrated into the second separator 120. The second separator 120 can be a membrane separator or a rotary separator. In some embodiments, the second separator 120 can integrate the pump 121 and the condenser 118 functionality in an individual apparatus. In some embodiments, the combined functionality can be enclosed together within a housing.

After phase separation, the liquid water passes out of the second separator 120 via stream 122 and can be stored in a collection tank 124 or passed through to further processing. In some embodiments, the water can be filtered before exiting the urine processor assembly 100 via the stream 122.

After phase separation, the gases flow out of the second separator 120 via stream 123 and are vented to the cabin, expelled from the cabin, are stored for later use, or undergo further processing. In some embodiments, the gases can be filtered before exiting the urine processor assembly 100.

The distillation urine processor assembly provides an efficient and lower cost urine processing assembly. Use of the distillation urine processor assembly provides collection of about 90% of water from urine. Furthermore, the assembly provides urine processing functionality with component simplification and a reduced number of components from existing urine processors to ease manufacturing and decrease production costs.

## Claims

1. A distillation urine processor assembly comprising:
a first collection tank (104) that is operative to collect urine;
a heat exchanger (107) disposed downstream of the first collection tank (104) and in fluid communication with it; where the heat exchanger (107) is operative to heat urine with heat generated by phase separation of urine;
a first separating apparatus (114) comprising:
a first separator (109); where the first separator (109) is operative to separate urine into water vapor and brine; a heater integrated into the first separator (109); wherein the heater is operative to boil the urine and the heater is electric-powered;
at least one pump (108, 111); where the at least one pump is in fluid communication with the first separator (109);
a filter (113); wherein the brine is pumped through the filter (113); a second collection tank (112); wherein the second collection tank (112) is operative to store the brine discharged from the first separator (109); where the first separating apparatus (114) lies downstream of the heat exchanger (107);
a second separator (120); where the second separator (120) lies downstream of the heat exchanger (107) and in fluid communication with it; where the second separator (120) is operative to separate water from the gas; and
a storage tank (124) that is operative to store water discharged from the second separator.

2. The assembly of claim 1, further comprising a condenser (118); where the condenser (118) lies downstream of the heat exchanger (107) and upstream of the second separator (120), and optionally wherein the condenser (118) is integrated into the second separator (120).

3. The assembly of claim 1 or 2, wherein the at least one pump is integrated into the first separator (109).

4. The assembly of any preceding claim, further comprising a second pump that lies downstream of the first collection tank (104) and upstream of the heat exchanger (107).

5. The assembly of any preceding claim, wherein the first separator (109) and the second separator (120) are each independently a rotary separator, a membrane separator or an inertial separator; or
wherein the second separator (120) is a rotary separator; or
wherein the first separator (109) is a rotary separator.

6. The assembly of any preceding claim, wherein the first separator (109), the at least one pump, and the second collection tank (112) are arranged in a recycle loop.

7. The assembly of any preceding claim, wherein the first separating apparatus (114) further comprises a second storage tank (112).

8. The assembly of any preceding claim, wherein a pump is integrated into the second separator (120).

9. A method of processing urine using a distillation urine processor assembly comprising:
introducing urine into the assembly;
passing the urine through a heat exchanger (107);
pumping the urine through a first separator (109) that lies downstream of the heat exchanger (107);
boiling the urine by a heater integrated into the first separator (109), wherein the heater is electric-powered;
separating the urine into brine and a mixture of water vapor and gas in the first separator (109);
pumping brine from the first separator (109) through a filter;
storing the brine discharged from the first separator (109) in a second collection tank (112);
discharging the mixture of water vapor and gas from the first separator (109) through the heat exchanger (107); where heat from the mixture of water vapor and gas is transferred to the incoming urine; and
discharging the mixture of water vapor and gas through a second separator (120); where the second separator (120) is operative to separate water from the gas; the water being derived from condensed water vapor.

10. The method of claim 9, wherein the water discharged from the second separator (120) is stored in a storage tank (112); and/or
wherein the gas discharged from the second separator (120) is vented to the environment or stored for further processing.

11. The method of claim 9 or 10, further comprising heating the urine in the heat exchanger (107) via heat obtained from a mixture of water vapor and gas discharged from the first separator (109).

12. The method of any of claims 9-11, further comprising discharging the mixture of water vapor and gas from the heat exchanger (107) to a condenser, wherein the condenser lies downstream of the heat exchanger (107) and upstream of the second separator (120).

13. The method of any of claims 9-12, wherein the first separator (109) brings about separation of the brine from the mixture of water vapor and gas via phase separation.

14. The method of any of claims 9-13, wherein the second separator (120) brings about separation of the water from gas via filtration or membrane separation.

15. The method of any of claims 9-14, wherein the second separator (120) is a rotary separator.

## Patentansprüche

1. Eine Destillations-Urin-Prozessoranordnung, umfassend:
einen ersten Sammeltank (104), der zum Sammeln von Urin betreibbar ist;
einen Wärmetauscher (107), der stromabwärts des ersten Sammeltanks (104) angeordnet und mit diesem in Fluidverbindung steht; wobei der Wärmetauscher (107) betreibbar ist, Urin mit Wärme zu erwärmen, die durch Phasentrennung von Urin erzeugt wird;
eine erste Trennvorrichtung (114), umfassend:
einen ersten Abscheider (109); wobei der erste Abscheider (109) betreibbar ist, Urin in Wasserdampf und Sole zu trennen; eine in den ersten Abscheider (109) integrierte Heizung; wobei die Heizung betreibbar ist, den Urin zu sieden, und die Heizung elektrisch betrieben wird;
mindestens eine Pumpe (108, 111); wobei die mindestens eine Pumpe mit dem ersten Abscheider (109) in Fluidverbindung steht;
einen Filter (113); wobei die Sole durch den Filter (113) gepumpt wird; einen zweiten Sammeltank (112); wobei der zweite Sammeltank (112) betreibbar ist, die aus dem ersten Abscheider (109) abgegebene Sole zu speichern; wobei die erste Trennvorrichtung (114) stromabwärts des Wärmetauschers (107) liegt;
einen zweiten Abscheider (120); wobei der zweite Abscheider (120) stromabwärts des Wärmetauschers (107) liegt und mit diesem in Fluidverbindung steht; wobei der zweite Abscheider (120) betreibbar ist, Wasser von Gas zu trennen; und
einen Speichertank (124), der betreibbar ist, aus dem zweiten Abscheider abgegebenes Wasser zu speichern.

2. Die Anordnung nach Anspruch 1, ferner umfassend einen Kondensator (118); wobei der Kondensator (118) stromabwärts des Wärmetauschers (107) und stromaufwärts des zweiten Abscheiders (120) liegt, und wobei der Kondensator (118) optional in den zweiten Abscheider (120) integriert ist.

3. Die Anordnung nach Anspruch 1 oder 2, wobei die mindestens eine Pumpe in den ersten Abscheider (109) integriert ist.

4. Die Anordnung nach einem der vorhergehenden Ansprüche, ferner umfassend eine zweite Pumpe, die stromabwärts des ersten Sammeltanks (104) und stromaufwärts des Wärmetauschers (107) liegt.

5. Die Anordnung nach einem der vorhergehenden Ansprüche, wobei der erste Abscheider (109) und der zweite Abscheider (120) jeweils unabhängig voneinander ein Rotationsabscheider, ein Membranabscheider oder ein Trägheitsabscheider sind; oder
wobei der zweite Abscheider (120) ein Rotationsabscheider ist; oder
wobei der erste Abscheider (109) ein Rotationsabscheider ist.

6. Die Anordnung nach einem der vorhergehenden Ansprüche, wobei der erste Abscheider (109), die mindestens eine Pumpe und der zweite Sammeltank (112) in einer Rückführschleife angeordnet sind.

7. Die Anordnung nach einem der vorhergehenden Ansprüche, wobei die erste Trennvorrichtung (114) ferner einen zweiten Speichertank (112) umfasst.

8. Die Anordnung nach einem der vorhergehenden Ansprüche, wobei eine Pumpe in den zweiten Abscheider (120) integriert ist.

9. Ein Verfahren zur Verarbeitung von Urin unter Verwendung einer Destillations-Urin-Prozessoranordnung, umfassend:
Einleiten von Urin in die Anordnung;
Leiten des Urins durch einen Wärmetauscher (107);
Pumpen des Urins durch einen ersten Abscheider (109), der stromabwärts des Wärmetauschers (107) liegt;
Sieden des Urins durch eine in den ersten Abscheider (109) integrierte Heizung, wobei die Heizung elektrisch betrieben wird;
Trennen des Urins in Sole und ein Gemisch aus Wasserdampf und Gas in dem ersten Abscheider (109);
Pumpen von Sole aus dem ersten Abscheider (109) durch einen Filter;
Speichern der aus dem ersten Abscheider (109) abgegebenen Sole in einem zweiten Sammeltank (112);
Abgeben des Gemischs aus Wasserdampf und Gas aus dem ersten Abscheider (109) durch den Wärmetauscher (107); wobei Wärme aus dem Gemisch aus Wasserdampf und Gas auf den einströmenden Urin übertragen wird; und
Abgeben des Gemischs aus Wasserdampf und Gas durch einen zweiten Abscheider (120); wobei der zweite Abscheider (120) betreibbar ist, Wasser von Gas zu trennen; wobei das Wasser aus kondensiertem Wasserdampf stammt.

10. Das Verfahren nach Anspruch 9, wobei das aus dem zweiten Abscheider (120) abgegebene Wasser in einem Speichertank (112) gespeichert wird; und/oder
wobei das aus dem zweiten Abscheider (120) abgegebene Gas an die Umgebung abgegeben oder zur weiteren Verarbeitung gespeichert wird.

11. Das Verfahren nach Anspruch 9 oder 10, ferner umfassend das Erwärmen des Urins in dem Wärmetauscher (107) mittels Wärme, die aus einem aus dem ersten Abscheider (109) abgegebenen Gemisch aus Wasserdampf und Gas gewonnen wird.

12. Das Verfahren nach einem der Ansprüche 9-11, ferner umfassend das Abgeben des Gemischs aus Wasserdampf und Gas aus dem Wärmetauscher (107) an einen Kondensator, wobei der Kondensator stromabwärts des Wärmetauschers (107) und stromaufwärts des zweiten Abscheiders (120) liegt.

13. Das Verfahren nach einem der Ansprüche 9-12, wobei der erste Abscheider (109) die Trennung der Sole von dem Gemisch aus Wasserdampf und Gas mittels Phasentrennung bewirkt.

14. Das Verfahren nach einem der Ansprüche 9-13, wobei der zweite Abscheider (120) die Trennung des Wassers von Gas mittels Filtration oder Membrantrennung bewirkt.

15. Das Verfahren nach einem der Ansprüche 9-14, wobei der zweite Abscheider (120) ein Rotationsabscheider ist.

## Revendications

1. Un ensemble de traitement d'urine par distillation comprenant :
un premier réservoir de collecte (104) qui est opérationnel pour collecter l'urine ;
un échangeur de chaleur (107) disposé en aval du premier réservoir de collecte (104) et en communication fluidique avec celui-ci ; où l'échangeur de chaleur (107) est opérationnel pour chauffer l'urine avec la chaleur générée par la séparation de phase de l'urine ;
un premier appareil de séparation (114) comprenant :
un premier séparateur (109) ; où le premier séparateur (109) est opérationnel pour séparer l'urine en vapeur d'eau et en saumure ; un dispositif de chauffage intégré au premier séparateur (109) ; dans lequel le dispositif de chauffage est opérationnel pour faire bouillir l'urine et le dispositif de chauffage est alimenté électriquement ;
au moins une pompe (108, 111) ; où l'au moins une pompe est en communication fluidique avec le premier séparateur (109) ;
un filtre (113) ; dans lequel la saumure est pompée à travers le filtre (113) ; un second réservoir de collecte (112) ; dans lequel le second réservoir de collecte (112) est opérationnel pour stocker la saumure évacuée du premier séparateur (109) ; où le premier appareil de séparation (114) se situe en aval de l'échangeur de chaleur (107) ;
un second séparateur (120) ; où le second séparateur (120) se situe en aval de l'échangeur de chaleur (107) et en communication fluidique avec celui-ci ; où le second séparateur (120) est opérationnel pour séparer l'eau du gaz ; et
un réservoir de stockage (124) qui est opérationnel pour stocker l'eau évacuée du second séparateur.

2. L'ensemble de la revendication 1, comprenant en outre un condenseur (118) ; où le condenseur (118) se situe en aval de l'échangeur de chaleur (107) et en amont du second séparateur (120), et facultativement dans lequel le condenseur (118) est intégré au second séparateur (120).

3. L'ensemble de la revendication 1 ou 2, dans lequel l'au moins une pompe est intégrée au premier séparateur (109).

4. L'ensemble de l'une quelconque des revendications précédentes, comprenant en outre une seconde pompe qui se situe en aval du premier réservoir de collecte (104) et en amont de l'échangeur de chaleur (107).

5. L'ensemble de l'une quelconque des revendications précédentes, dans lequel le premier séparateur (109) et le second séparateur (120) sont chacun indépendamment un séparateur rotatif, un séparateur à membrane ou un séparateur inertiel ; ou
dans lequel le second séparateur (120) est un séparateur rotatif ; ou
dans lequel le premier séparateur (109) est un séparateur rotatif.

6. L'ensemble de l'une quelconque des revendications précédentes, dans lequel le premier séparateur (109), l'au moins une pompe, et le second réservoir de collecte (112) sont disposés dans une boucle de recyclage.

7. L'ensemble de l'une quelconque des revendications précédentes, dans lequel le premier appareil de séparation (114) comprend en outre un second réservoir de stockage (112).

8. L'ensemble de l'une quelconque des revendications précédentes, dans lequel une pompe est intégrée au second séparateur (120).

9. Un procédé de traitement d'urine utilisant un ensemble de traitement d'urine par distillation comprenant :
l'introduction d'urine dans l'ensemble ;
le passage de l'urine à travers un échangeur de chaleur (107) ;
le pompage de l'urine à travers un premier séparateur (109) qui se situe en aval de l'échangeur de chaleur (107) ;
l'ébullition de l'urine par un dispositif de chauffage intégré au premier séparateur (109), dans lequel le dispositif de chauffage est alimenté électriquement ;
la séparation de l'urine en saumure et en un mélange de vapeur d'eau et de gaz dans le premier séparateur (109) ;
le pompage de la saumure depuis le premier séparateur (109) à travers un filtre ;
le stockage de la saumure évacuée du premier séparateur (109) dans un second réservoir de collecte (112) ;
l'évacuation du mélange de vapeur d'eau et de gaz depuis le premier séparateur (109) à travers l'échangeur de chaleur (107) ; où la chaleur du mélange de vapeur d'eau et de gaz est transférée à l'urine entrante ; et
l'évacuation du mélange de vapeur d'eau et de gaz à travers un second séparateur (120) ; où le second séparateur (120) est opérationnel pour séparer l'eau du gaz ; l'eau étant dérivée de la vapeur d'eau condensée.

10. Le procédé de la revendication 9, dans lequel l'eau évacuée du second séparateur (120) est stockée dans un réservoir de stockage (112) ; et/ou
dans lequel le gaz évacué du second séparateur (120) est évacué vers l'environnement ou stocké pour un traitement ultérieur.

11. Le procédé de la revendication 9 ou 10, comprenant en outre le chauffage de l'urine dans l'échangeur de chaleur (107) via la chaleur obtenue à partir d'un mélange de vapeur d'eau et de gaz évacué du premier séparateur (109).

12. Le procédé de l'une quelconque des revendications 9 à 11, comprenant en outre l'évacuation du mélange de vapeur d'eau et de gaz depuis l'échangeur de chaleur (107) vers un condenseur, dans lequel le condenseur se situe en aval de l'échangeur de chaleur (107) et en amont du second séparateur (120).

13. Le procédé de l'une quelconque des revendications 9 à 12, dans lequel le premier séparateur (109) assure la séparation de la saumure du mélange de vapeur d'eau et de gaz via une séparation de phase.

14. Le procédé de l'une quelconque des revendications 9 à 13, dans lequel le second séparateur (120) assure la séparation de l'eau du gaz via une filtration ou une séparation par membrane.

15. Le procédé de l'une quelconque des revendications 9 à 14, dans lequel le second séparateur (120) est un séparateur rotatif.
